# EUROPEAN PATENT SPECIFICATION

(11) **EP 3 150 897 B1**
(45) Date of publication and mention of the grant of the patent: **05.09.2018**
(21) Application number: 15798971.6
(22) Date of filing: 29.05.2015
(51) Int. Cl.: F16L 59/065, B32B 9/00

(54) **VACUUM HEAT-INSULATING MATERIAL**
VAKUUMWÄRMEDÄMMENDES MATERIAL
MATÉRIAU D'ISOLATION THERMIQUE SOUS VIDE

(30) Priority: 30.05.2014 JP 2014113179
(43) Date of publication of application: 05.04.2017
(73) Proprietor: Asahi Glass Company, Limited, Tokyo 100-8405 (JP)
(72) Inventor: SHINOHARA, Nobuhiro, Tokyo 100-8405 (JP); HAMADA, Yuya, Tokyo 100-8405 (JP)
(74) Representative: Müller-Boré & Partner Patentanwälte PartG mbB
(86) International application number: PCT/JP2015/065647
(87) International publication number: WO 2015/182768

(56) References cited:
- JP-A- 2006 017 169
- JP-A- 2008 002 668
- JP-A- 2008 215 538
- JP-A- 2014 214 856
- JP-B2- 3 482 399
- JP-B2- H0 446 348
- JP-B2- H0 566 341

## Description

### TECHNICAL FIELD

The present invention relates to a vacuum insulation panel having a sufficient strength and excellent handling performance.

### BACKGROUND ART

Vacuum insulation panels have been widely employed for the purpose of reducing energy consumption with thermal insulation in various fields, such as houses, buildings, vehicles, heat/cold insulating containers, refrigerators and water heaters. As the vacuum insulation panels, vacuum insulation panels wherein a powder material or a fiber material as a core member is decompressed and encapsulated in an envelope have been known for example. Although the vacuum insulation panels with a powder material used as the core member are poorer in initial thermal insulation performance than the vacuum insulation panels with a fiber material used as the core member, the former vacuum insulation panels are excellent in long-term durability because of being capable of maintaining a sufficient thermal insulation performance even under a low vacuum. Further, the vacuum insulation panels with a powder material used as the core member are the advantage of being easily produced as a thin board or a product having a curved surface shape.

The core member made of a powder material is, however, poor in work efficiency. It is difficult to obtain vacuum insulation panels having a high strength because the vacuum insulation panels needs to be molded so as to have a low density, when being molded as a molded product by a press, in order to obtain sufficient thermal insulation performance. From this point of view, vacuum insulation panels with a powder material and a fiber material being used as the core member in combination have been proposed. Specific examples include vacuum insulation panels defined in the following items (1) to (3):
(1) A vacuum insulation panel using a molded product obtained by blending wet silica and a fiber-reinforcing material and pressurizing these materials (Patent Document 1)
(2) A vacuum insulation panel using a molded product obtained by blending dry silica, wet silica and a fiber-reinforcing material and pressure-molding these materials (Patent Document 2)
(3) A vacuum insulation panel using a molded product having a density of from 100 to 300 kg/m³, which is obtained by blending dry silica, carbon black and an inorganic fiber material and pressure-molding these materials (Patent Document 3)

### PRIOR ART DOCUMENTS

### PATENT DOCUMENTS

Patent Document 1: JP-A-04-046348
Patent Document 2: JP-A-05-066341
Patent Document 3: JP Patent No. 3482399

### DISCLOSURE OF INVENTION

### TECHNICAL PROBLEM

Even the vacuum insulation panels defined in items (1) to (3) are difficult to have a sufficient strength, in particular, even when the molded product is large, which causes, in some cases, trouble, such as a case where the panels are broken during transport because of being poor in handling performance.

It is an object of the present invention to provide a vacuum insulation panel which has a sufficient strength and excellent handling performance.

### SOLUTION TO PROBLEM

The vacuum insulation panel according to the present invention includes a molded product and an envelope having an airtight property; the molded product being decompressed and encapsulated in the envelope; the molded product being molded from fibers and a powder material containing fumed silica; the fibers including fibers having a fiber length D30 of at least 100 µm and fibers having a fiber length D90 of at most 20 mm; the content ratio of the fumed silica in the powder material being at least 70 mass%; and the content ratio of the fibers being from 2 to 30 parts by mass to the powder material having a total mass of 100 parts by mass. In the vacuum insulation panel according to the present invention it is preferred that the molded product is molded from a binder, fibers and a powder material containing fumed silica. In the vacuum insulation panel according to the present invention, it is preferred that the content ratio of the binder be from 0.1 to 15 parts by mass to the powder material having a total mass of 100 parts by mass.

It is preferred that the powder material contain either one or both of porous silica and an opacifier.

It is preferred that the content ratio of the porous silica in the powder material (having 100 mass%) be at most 30 mass%.

It is preferred that the content ratio of the opacifier in the powder material (having 100 mass%) be at most 30 mass%.

It is preferred that the molded product include fumed silica particles, the fumed silica particles having a binder applied thereto, and that the ratio of the mass M_{A} of the fumed silica particles contained in the powder material prior to the application of the binder in reference to the mass M_{B} of particles of the porous silica (M_{A}/M_{B}) be from 70/30 to 100/0.

It is preferred that the molded product have a density of from 0.15 to 0.35 g/cm³.

It is preferred that the fibers include either one or both of resin fibers or inorganic fibers.

It is preferred that the fibers contain at least one kind of the inorganic fibers selected from the group consisting of alumina fibers, mullite fibers, silica fibers, glass wool, glass fibers, rock wool, slag wool, silicon carbide fibers, carbon fibers, silica-alumina fibers, silica-alumina-magnesia fibers, silica-alumina-zirconia fibers and silica-magnesia-calcia fibers.

It is preferred that the envelope have a degree of vacuum of at most 1×10³ Pa therein.

It is preferred that the vacuum insulation panel have a bending strength of at least 5 kPa and a post-temporary-break bending strength of at least 5 kPa.

### ADVANTAGEOUS EFFECTS OF INVENTION

The vacuum insulation panel according to the present invention has advantages of having a sufficient strength and being excellent in handling performance, and of minimizing the occurrence of trouble, such as breakage during transport, in particular, even when the molded product is large.

### BRIEF DESCRIPTION OF DRAWINGS

Fig. 1 is a schematic cross-sectional view of the vacuum insulation panel according to an embodiment of the present invention.
Fig. 2 is a graph showing one example of the stress-strain curve in a three-point bending test.
Fig. 3 is a graph showing another example of the stress-strain curve in the three-point bending test.
Fig. 4 is a graph showing another example of the stress-strain curve in the three-point bending test.

### DESCRIPTION OF EMBODIMENTS

The definitions of the following terms are applied through Description and Claims.

The term "core member" means a material forming the molded product in the vacuum insulation panel, which is formed into a desired shape by molding.

The term "fumed silica with a binder" means one prepared by applying a binder to the fumed silica particles that have not yet been blended with another component, such as particles made of porous silica or fibers. The fumed silica means fine silica particles made of primary particles which are amorphous and spherical and are free of micropores. The fumed silica may be, for example, obtained by evaporating silicon tetrachloride and carrying out gas phase reaction in a hydrogen flame having a high temperature.

The term "opacifier" means one made of particles that suppress radiation heat transfer by reflecting (scattering) infrared light, or absorbing infrared light, followed by carrying out isotropic radiation when reradiating a temperature increase component caused by such absorption such that the directivity of the infrared light is disturbed.

The term "fiber length D30" means a fiber length that is owned by 30% of the total fibers in a cumulative frequency distribution curve wherein the total number in a fiber length distribution sought based on the number is 100%. The term "fiber length D90" means a fiber length that is owned by 90% of the total fibers in a cumulative frequency distribution curve wherein the total number in a fiber length distribution sought based on the number is 100%. The fiber length distribution may be sought based on a frequency distribution and a cumulative frequency distribution curve obtained by randomly measuring the lengths of at least 50 fibers in a photo observed by an optical microscope.

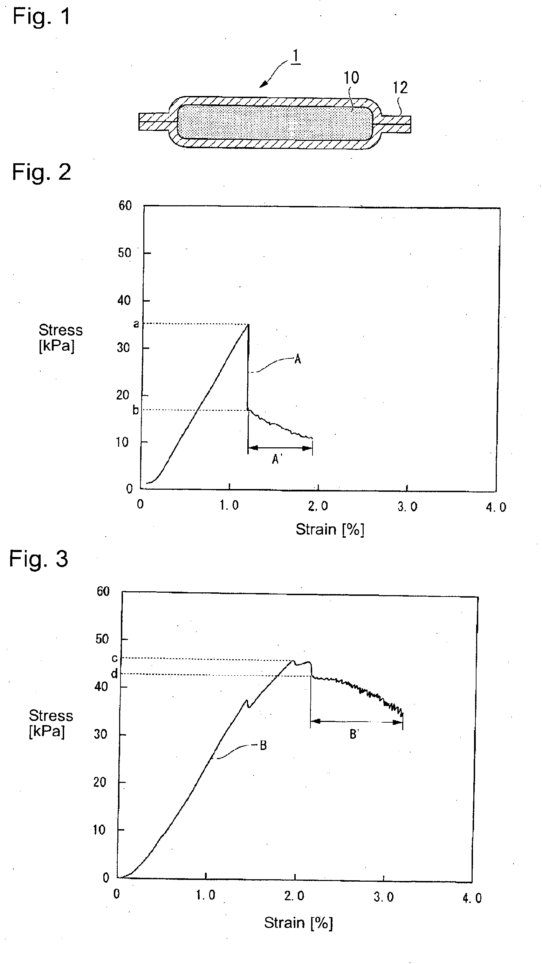

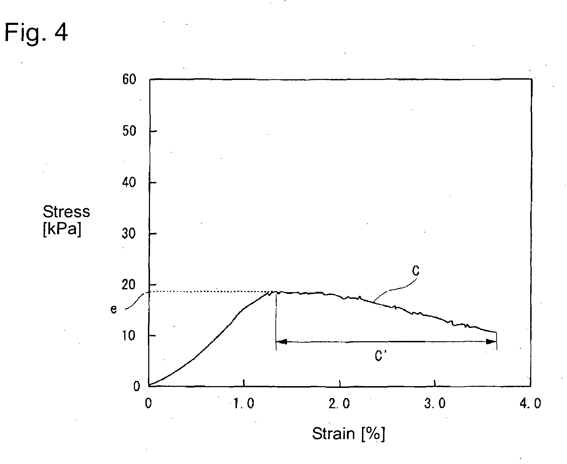

The term "bending strength" means the maximum value of the stresses produced in a three-point bending test. The term "post-temporary-break bending strength" means the maximum value of stresses that are produced by strain, in a region where the stresses continue to gradually decrease as the strain increases, after the bending stress is detected in the three-point bending test. For example, in the stress-strain curve A exemplified in Fig. 2, the bending stress is a stress a (kPa) as the maximum stress value while the post-temporary-break bending strength is a stress b (kPa) as the maximum stress value in a region A' where the stresses continue to gradually decrease as the strain increases after that. In the stress-strain curve B exemplified in Fig. 3, the bending stress is a stress c (kPa) as the maximum stress value while the post-temporary-break bending strength is a stress d (kPa) as the maximum stress value in a region B' where the stresses continue to gradually decrease as the strain increases after that. In the stress-strain curve C exemplified in Fig. 4, the bending stress is a stress e (kPa) as the maximum stress value while the post-temporary-break bending strength is supposed to accord with the bending stress because the maximum stress value is also a stress e (kPa) in a region C' where the stresses continue to gradually decrease as the strain increases after that.

### (Vacuum insulation panel)

Fig. 1 is a schematic cross-sectional view of the vacuum insulation panel according to an embodiment of the present invention.

The vacuum insulation panel 1 includes a molded product 10 molded from a core member, and an envelope 12 having an airtight property as shown in Fig. 1. The vacuum insulation panel 1 is an insulation panel wherein the molded product 10 is decompressed and encapsulated in the envelope 12.

### (Molded product)

The molded product 10 is one prepared by molding the core member containing fibers, and a powder material containing fumed silica. The molded product 10 may be one prepared by molding fibers, a powder material containing fumed silica, and a binder.

### (Powder material)

The powder material contains fumed silica and may contain either one or both of porous silica and an opacifier as other powder material(s) as required. The powder material may contain only fumed silica. The other powder material(s) in combination with the fumed silica may be only one kind of powder material or a combination of at least two kinds of powder materials.

Because the fumed silica is extremely fine powder, its specific surface area is normally employed as the index representing the size of the particles.

The fumed silica has a specific surface area of preferably from 50 to 400 m²/g, more preferably from 100 to 350 m²/g and particularly preferably from 200 to 300 m²/g. When the specific surface area of the fumed silica is at least the lower limit, it is easy to obtain excellent insulation performance. When the specific surface area of the fumed silica is at most the upper limit, it is easy to apply the binder to the particles.

In the present invention, the specific surface area may be measured by a nitrogen adsorption method (BET method).

Specific examples of the fumed silica include products commercially available under the trademarks of AEROSIL 200 (specific surface area: 200 m²/g, manufactured by NIPPON AEROSIL CO., LTD.), AEROSIL 300 (specific surface area: 300 m²/g, manufactured by NIPPON AEROSIL CO., LTD.), CAB-O-SIL M-5 (specific surface area: 200 m²/g, manufactured by Cabot Corporation, Japan), CAB-O-SIL H-300 (specific surface area: 300 m²/g, manufactured by Cabot Corporation, Japan), and REOLOSIL QS30 (specific surface area: 300 m²/g, manufactured by Tokuyama Corporation).

The fumed silica may be made of only one kind of material or a combination of at least two kinds of materials.

The porous silica has a specific surface area of preferably from 100 to 800 m²/g, more preferably from 200 to 750 m²/g, particularly preferably from 300 to 700 m²/g. When the specific surface area of the porous silica is at least the lower limit, it is easy to obtain excellent insulation performance. When the specific surface area of the porous silica is at most the upper limit, it is possible to reduce the amount of a binder absorbed in the porous silica particles when the binder is coated to the porous silica particles. For this reason, the molded product can be formed under a lower pressure even when the added amount of the binder is small. Thus, the molded product can have a reduced density, being easily provided with excellent insulation performance.

The porous silica has a porosity of preferably from 60 to 90%, more preferably from 65 to 85%, particularly preferably from 70 to 80%. When the porosity of the porous silica is at least the lower limit, it is easy to obtain excellent insulation performance because it is possible to reduce the thermal conductivity in solid. When the porosity of the porous silica is at most the upper limit, it is easy to obtain excellent insulation performance because porous silica particles are hardly to be crushed during molding with the result that the porous silica particles can maintain porosity. The porosity may be measured by a nitrogen adsorption method (BET method).

The porous silica has an average particle size of preferably from 1 to 300 µm, more preferably from 2 to 150 µm, particularly preferably from 3 to 100 µm when the average particle size is measured in volume base by, e.g. a laser diffraction scattering method or a coulter counter method. When the average particle size of the porous silica is at least the lower limit, it is easy not only to provide the porous silica with a high porosity but also to obtain excellent insulation performance. When the average particle size of the porous silica is at most the upper limit, it is easy to obtain excellent insulation performance because the molded product can be prevented from having an excessively high density.

Specific examples of the porous silica include products commercially available under the trademarks of M.S. GEL and SUNSPHERE (both being manufactured by AGC Si-Tech. Co. Ltd.). The porous silica may be made of only one kind of material or a combination of at least two kinds of materials.

When the core member contains the opacifier, infrared light is reflected (scattered), or infrared light is absorbed, followed by being subjected to isotropic radiation when reradiating a temperature increase component caused by such absorption such that the total amount of the infrared light passing through the molded product is reduced to suppress radiation heat transfer. From the viewpoint that the contact between particles of the opacifier is reduced such that a solid heat transfer path is difficult to be formed, it is preferred that the particles of the opacifiers be uniformly scattered in the core member.

Examples of the opacifiers include metal particles (such as aluminum particles, silver particles, and gold particles) and inorganic particles (such as graphite particles, carbon black particles, silicon carbide particles, titanium oxide particles, tin oxide particles and potassium titanate particles). The opacifier may be made of only one kind of material or a combination of at least two kinds of materials.

The opacifier has an average particle size of preferably from 0.1 to 100 µm, more preferably 0.5 to 50 µm, particularly preferably from 1 to 20 µm. When the average particle size of the opacifier is at least the lower limit, it is easy to uniformly scatter the particles of the opacifier in the molded product to obtain excellent insulation performance. When the average particle size of the opacifier is at most the upper limit, it is easy to handle the molded product because the molded product is prevented from having an excessively low strength.

### (Binder)

The core member according to the present invention may contain a binder.

The inclusion of the binder in the core member allows particles made of fumed silica or particles of fumed silica and particles of other components (such as, particles made of porous silica and fibers) to be bonded together even when molding is carried out under a low pressure. Thus the vacuum insulation panel is configured such that the molded product has a sufficient strength.

Preferably, the binder is applied to particles of fumed silica before the particles are blended with another component to produce fumed silica particles with a binder. Thus, it becomes easy to sufficiently obtain the effect achieved by the binder. It should be noted that even if the binder is applied to particles made of porous silica, it is difficult to have the advantage achieved by the binder because the binder is absorbed into particles made of porous silica.

The binder may be an organic binder or an inorganic binder. Among them, the binder is preferably an inorganic binder from the viewpoint that such an inorganic binder has a low thermal conductivity and is capable of easily obtaining an excellent insulating property.

Examples of the inorganic binder include a binder made of sodium silicate, a binder made of aluminum phosphate, a binder made of magnesium sulfate and a binder made of magnesium chloride. Among them, sodium silicate is particularly preferred from the viewpoint that it is capable of easily obtaining an excellent insulating property.

The binder may be made of only one kind of binder material or a combination of at least two kinds of binder materials.

### (Fibers)

The fibers may be fibers commonly employed in vacuum insulation panels. Examples of the fibers include resin fibers and inorganic fibers. Among them, inorganic fibers are preferred from the viewpoints of minimizing the evaporation of gas components under vacuum, reducing a decrease in the insulation performance due to a drop in the degree of vacuum and of having an excellent heat resistance. The fibers may be made of only one kind of fibers or a combination of at least two kinds of fibers.

Examples of the inorganic fibers include alumina fibers, mullite fibers, silica fibers, glass wool, glass fibers, rock wool, slag wool, silicon carbide fibers, carbon fibers, silica-alumina fibers, silica-alumina-magnesia fibers, silica-alumina-zirconia fibers and silica-magnesia-calcia fibers. Among them, glass fibers, rock wool and silica-magnesia-calcia fibers are preferred from the viewpoint of cost and safety.

The fiber length D30 of the employed fibers is preferably at least 100 µm, more preferably at least 200 µm, particularly preferably at least 500 µm. When the fiber length D30 is at least the lower limit, it is possible to provide a high strength vacuum insulation panel difficult to be broken.

On the other hand, the fiber length D90 of the employed fibers is preferably at most 20 mm, more preferably at most 10 mm, particularly at most 5 mm. When the fiber length D90 is at most the upper limit, it is easy to have the advantage achieved by the fibers because the fibers are prevented from being entangled such that the fibers are likely to be uniformly blended with the powder particles.

The fibers have a thickness (diameter) of preferably at most 20 µm, more preferably at most 15 µm, particularly 10 µm from the viewpoint of reducing an increase in the heat transfer in solid by the fibers. The fibers have a thickness (diameter) of at least 1 µm, more preferably at least 3 µm from the viewpoint of being easy to produce a high strength vacuum panel difficult to be broken. The fibers have a thickness of preferably from 3 to 15 µm.

### (Proportion of powder material, binder and fibers)

The (content) proportion of the fumed silica in the powder material (100 mass%) is at least 70 mass%, preferably from 70 to 100 mass%, more preferably from 80 to 100 mass%, and particularly preferably from 90 to 100 mass%. When the proportion of the fumed silica is at least the lower limit, it is easy to obtain a high strength vacuum insulation panel.

The (content) proportion of the porous silica in the powder material (100 mass%) is preferably at most 30 mass%, more preferably from 2 to 20 mass%, and particularly preferably from 5 to 10 mass%. When the proportion of the porous silica is at least the lower limit, it is possible to obtain a vacuum insulation panel having excellent insulation performance. When the proportion of the porous silica is at most the upper limit, it is easy to obtain a high strength vacuum insulation panel.

When the core member is made of fumed silica particles with a binder preliminary applied to the particles thereof, the ratio (M_{A}/M_{B}) of the mass M_{A} of the fumed silica particles with a binder having not yet been applied to the particles thereof to the mass M_{B} of the porous silica particles is preferably from 70/30 to 100/0, more preferably 80/20 to 98/2, particularly preferably from 90/10 to 95/5. When M_{A}/M_{B} is within any one of the above-mentioned ranges, it is easy to obtain a vacuum insulation panel having excellent insulation performance because it is possible to produce a molded product having a lower density and a sufficient strength.

The (content) proportion of the opacifier in the powder material (100 mass%) is preferably at most 30 mass%, more preferably from 5 to 25 mass%, particularly preferably from 10 to 20 mass%. When the proportion of the opacifier is at least the lower limit, it is easy to have the advantage achieved by the opacifier. When the proportion of the opacifier is at most the upper limit, it is easy to obtain excellent insulation performance because it is possible to suppress an increase in the heat transfer in solid caused by the opacifier.

The (content) proportion of the binder to the powder material having 100 parts by mass is preferably from 0.1 to 15 parts by mass, more preferably from 0.5 to 10 parts by mass, further preferably from 1 to 2 parts by mass. When the proportion of the binder is at least the lower limit, it is possible to obtain a vacuum insulation panel having excellent insulation performance because it is possible to obtain a molded product having a lower density and a sufficient strength. When the proportion of the binder is at most the upper limit, it is possible to suppress a decrease in the insulation performance because it is possible to suppress an increase in the heat transfer in solid caused by the binder.

The (content) proportion of the fibers to the powder material having 100 parts by mass is from 2 to 30 parts by mass, preferably from 4 to 20 parts by mass, more preferably from 5 to 10 parts by mass. When the proportion of the fibers is at least the lower limit, it is easy to obtain a high strength vacuum insulation panel difficult to be broken. When the proportion of the fibers is at most the upper limit, it is easy to suppress a decrease in the insulation performance because it is possible to suppress an increase the heat transfer in solid caused by the fibers.

The molded product 10 has a density of from 0.15 to 0.35 g/cm³, more preferably from 0.17 to 0.21 g/cm³. When the density of the molded product 10 is at least the lower limit, it is easy to handle the molded product, and it is difficult for the powder material to scatter from the molded product when the molded product is decompressed and encapsulated. When the density of the molded product 10 is at most the upper limit, it is easy to stably obtain excellent insulation performance.

### (Envelope)

It is sufficient that the envelope 12 has an airtight property such that the molded product 10 can be decompressed and encapsulated therein. The envelope 12 may be, for example, a bag made of a gas barrier film. The gas barrier film can be utilized without trouble as long as it is a known film employed in the vacuum insulation panels.

There is no particular limitation to the size and the shape of the envelope 12. The size and the shape may be properly determined so as to comply with the size and the shape of a desired vacuum insulation panel 1.

The degree of vacuum in the envelope 12 in the vacuum insulation panel 1 is preferably at most 1×10³ Pa, more preferably at most 5×10² Pa, further preferably at most 1×10² Pa from the viewpoint of having excellent insulation performance and extending the life of the vacuum insulation panel 1. The degree of vacuum in the envelope 12 is preferably at least 1 Pa, more preferably at least 10 Pa from the viewpoint of ease in decompressing the inside of the envelope.

The bending strength of the vacuum insulation panel according to the present invention is preferably at least 5 kPa, more preferably at least 10 kPa, further preferably at least 20 kPa. When the bending strength is at least the lower limit, it is easy to handle the molded product.

The post-temporary-break bending strength of the vacuum insulation panel according to the present invention is preferably at least 5 kPa, more preferably at least 10 kPa. When the post-temporary-break bending strength is at least the lower limit, handling performance is excellent.

### (Production process)

The process for producing the vacuum insulation panel 1 may be, for example, a process including step (x) and step (y) listed below:
(x) step for pressurizing the core member including the binder, the fibers and the powder material containing fumed silica to obtain the molded product 10.
(y) step for decompressing and encapsulating the molded product 10 in the envelope 12 to obtain the vacuum insulation panel 1.

### (Step (x))

The binder, the fibers and the powder material containing fumed silica are blended to obtain the core member, followed by pressurizing and molding the core member to produce the molded product 10.

Examples of the method for blending the binder, the fibers and the powder material containing fumed silica include a method using a V-type blender and a method using a blender with a stirrer. Among them the blending method is preferably carried out by use of a high speed stirring device, such as a blender with a stirrer, from the viewpoint that the respective components are provided with good dispersibility.

In step (x), in particular when porous silica is employed as well, it is preferred to preliminarily apply the binder to the fumed silica particles to prepare the fumed silica particles with a binder, followed by blending the fumed silica particles having the other components than the fumed silica. Thus, it is possible to reduce the amount of the binder because it is possible to prevent the binder from being absorbed in the porous silica particles so as to make it difficult to have the advantage achieved by the binder.

There is no particular limitation to the time when the binder is blended with the other materials. For example, the fumed silica, the porous silica, the fibers and the binder may be simultaneously blended together.

The binder is preferably dissolved in a solvent such that the binder can be blended as a binder solution. There is no particular limitation to the solvent used for the binder solution. Examples of the solvent include water and ethanol. Among them, water is preferred. The addition of water reduces the charge to the fumed silica and the porous silica such that it becomes difficult for the powder material to adhere to a mold or the like. Further, the fluidity of the powder material increases to make it easy to handle the powder material.

The binder solution is particularly preferably water glass that is a sodium silicate aqueous solution.

The proportion of the solid component as the binder in the binder solution (100 mass%) is preferably from 0.2 to 40 mass%, more preferably from 3 to 10 mass%. When the proportion of the binder is within any one of the above-mentioned ranges, it becomes easy to apply the binder to the powder material.

The adding amount of water to the core member is preferably from 5 to 50 parts by mass, more preferably from 10 to 30 parts by mass to the powder material having a total mass of 100 parts by mass. When the adding amount of water is at least the upper limit, it becomes easy to handle the powder material because it becomes more difficult for the powder material to adhere to a mold or the like and because the fluidity of the powder material increases. When the adding amount of water is at most the upper limit, it becomes easy to obtain a vacuum insulation panel having excellent insulation performance because it is easy to reduce the density of the molded product.

The binder solution may be applied to the powder material or the fibers by spray-coating or the like.

The solvent containing the binder blended with the powder material is preferred to be evaporated before the molded product 10 is decompressed and encapsulated in the envelope 12 in step (y). Thus, the particles of the powder material, and the particles and the fibers are bonded together more firmly by the binder. Examples of the method for evaporating the solvent include a method for carrying out heating by use of thermostatic oven and a method for carrying out heating by use of an electric furnace.

The method for molding the core member to obtain the molded product 10 may be a known method and may be a method for placing the core member in a mold and molding the core member with pressure, for example.

### (Step (y))

For example, the molded product 10 obtained in step (x) is accommodated in the envelope 12, and the envelope 12 is sealed under a depressurized condition, followed by returning the outside of the envelope 12 to atmospheric conditions to obtain the vacuum insulation panel 1. Specifically, the molded product 10 is accommodated in the envelope 12 prepared by superposing two films and preliminarily sealing three sides of the superposed ones, the envelope with the molded product accommodated therein is placed in a vacuum chamber with a heat-seal function, and the inside of the vacuum chamber is depressurized. After the inside of the vacuum chamber is depressurized to a certain pressure, the open one side of the envelope 12 is heat-sealed, and then the inside of the vacuum chamber returns to atmospheric conditions.

It should be noted that a process may be adopted to decompress and encapsulate the molded product 10 in the envelope 12 by accommodating the molded product 10 into the envelope 12, followed by sealing the envelope 12 by, e.g. heat-sealing, while the air in the envelope 12 is sucked out to decompress the inside of the envelope in step (y).

The vacuum insulation panel according to the present invention described above employs the molded product molded from the core member including the powder material containing fumed silica, the binder and the fibers having specific fiber lengths in a specific ratio such that the vacuum insulation panel is unlikely to cause trouble, such as a case where the panel is broken during transport, because of having a sufficient strength and being excellent in handling performance.

It should be noted that the vacuum insulation panel according to the present invention is not limited to the above-mentioned vacuum insulation panel 1. For example, the vacuum insulation panel according to the present invention may be a vacuum insulation panel which has the molded product decompressed and encapsulated in the envelope, being accommodated in an inner bag having an air permeability. In other words, the vacuum insulation panel may employ the molded product which is made from the core member and accommodated in an inner bag.

It is sufficient that the inner bag has air permeability and can prevent the powder material forming the core member from coming out during decompression and encapsulation. Examples of the inner bag include a bag made of a paper material and a bag made of nonwoven fabric.

There are no particularly limitations to the size and the shape of the inner bag. The size and the shape may be properly determined so as to comply with the size and shape of a desired vacuum insulation panel.

As the method for producing the vacuum insulation panel by use of the inner bag, a method similar to the above-mentioned method described with reference to the vacuum insulation panel 1 may be adopted except that the molded product is decompressed and encapsulated in the envelope, being accommodated in the inner bag, in step (y).

### EXAMPLES

Now, although the present invention will be specifically described in reference to Examples, the present invention is not limited to the Examples described below.

### [Measurement of fiber length]

The fiber lengths D30 and D90 of the fibers employed as one of the materials were found based on a frequency distribution and a cumulative frequency distribution curve obtained by randomly measuring the lengths of at least 50 fibers in a photo observed by an optical microscope.

### [Measurement of bending strength and post-temporary-break bending strength]

The bending strength and the post-temporary-break bending strength of the vacuum insulation panel obtained in each Example were measured by conducting a three-point bending test by use of a precision universal tester called AUTOGRAPH AGS-J (manufactured by Shimadzu Corporation).

The maximum value of the stresses produced in the three-point bending test was determined as being the bending stress. The maximum value of the stresses that were produced by strain, in a region where the stresses continued to gradually decrease as strain increased, after the bending stress was detected, was determined as being the post-temporary bending strength.

### [Measurement of thermal conductivity]

The thermal conductivity of the vacuum insulation panel obtained in each of the Examples were measured by use of a thermal conductivity tester HC-110 (manufactured by EKO Instruments).

### [Density of molded product]

The density of each molded product was calculated based on the size and the mass of each molded product.

### [Handling performance]

The ones that were not broken even when being supported at a single side by a single hand in respective steps, such as drying the molded products, and accommodation into films, were determined as being excellent, while the ones that were broken were determined as being insufficient.

### [Example 1]

40 Parts by mass of fumed silica (product name: "AEROSIL 300", specific surface area: 300 m²/g, manufactured by NIPPON AEROSIL CO., LTD., also applicable to the other examples) was blended, by use of a blender, with a binder solution, which was prepared by diluting 3.4 parts by mass (1.3 parts by mass in solid content conversion) of sodium silicate having a molecular ratio of 3 (manufactured by AGC Si-Tech Co. Ltd.) with 22.9 parts by mass of deionized water. Then 40 parts by mass of fumed silica and 20 parts by mass of porous silica available under the product name of "M.S. GEL" (manufactured by AGC Si-Tech Co. Ltd.) were added to the mixture, by followed by further addition of 2 parts by mass of silica-magnesia-calcia fibers (product name "Superwool (registered trademark) Plus bulk", D30: 227 µm, D90: 902 µm, manufactured by Shin-Nippon Thermal Ceramics Corporation) as the inorganic fibers. The blender was employed to blend these materials to obtain a core member.

The core member thus obtained was placed into a mold, the core member was pressurized to be molded in a plate having dimensions of 40 mm in length, 20 mm in width and 5 mm in thickness, and then the molded core member was heated at 200°C for 1 hour to form a molded product. The bending strength and the post-temporary-break bending strength of the molded product thus obtained were measured. Then the molded product thus obtained was accommodated into a commercially available gas barrier film (ADY-134, manufactured by ADY Co., Ltd.) having only three sides heat-sealed, and the film with the molded product accommodated therein was placed in a vacuum chamber with a heat-seal function. After that, the inside of the vacuum chamber was depressurized to 30 Pa, the open side of the envelope was heat-sealed for encapsulation with the depressurizing state kept, and the outside of the envelope was returned to atmospheric conditions to obtain a vacuum insulation panel.

A core member that was obtained in the same way was employed to form a molded product having dimensions of 80 mm in length, 80 mm in width and 5 mm in thickness. The molded product was accommodated in a commercially available gas barrier film (ADY-134, manufactured by ADY Co., Ltd.) having only three sides heat-sealed to obtain a sample. The thermal conductivity of the sample was measured in a chamber, the inside of which was depressurized to 30 Pa. After that, the sample is placed in the vacuum chamber with a heat-seal function. The inside of the vacuum chamber was depressurized to 30 Pa, the open side of the envelope was heat-sealed for encapsulation with the depressurizing state kept, and the outside of the envelope was returned to atmospheric conditions to obtain a vacuum insulation panel.

### [Examples 2 to 7 and 10]

In each example, a core member was obtained in the same way as Example 1 except that the composition of the core member was changed as shown in Table 1. Then the core member thus obtained was employed to obtain a molded product in the same way as Example 1. The bending stress and the post-temporary-break stress of the molded product, and the thermal conductivity of the resulting vacuum insulation panel were measured. Further, the handling performance of the molded product was evaluated.

### [Example 8]

37.5 Parts by mass of similar fumed silica was blended, by use of the blender, with a binder solution, which was prepared by diluting 2.8 parts by mass (1.1 parts by mass in solid content conversion) of sodium silicate having a molecular ratio of 3 (manufactured by AGC Si-Tech Co. Ltd.) with 19.1 parts by mass of deionized water. Then 37.5 parts by mass of fumed silica and 8.3 parts by mass of porous silica available under the product name of "M.S. GEL" (manufactured by AGC Si-Tech Co. Ltd.) were added to the mixture, by followed by further addition of 4.2 parts by mass of silica-magnesia-calcia fibers (product name "Superwool (registered trademark) Plus bulk", D30: 227µm, D90: 902µm, manufactured by Shin-Nippon Thermal Ceramics Corporation) as the inorganic fibers, and 6.7 parts by mass of graphite (product name "CP.B", manufactured by Nippon Graphite Corporation) as the opacifier. The blender was employed to blend these materials to obtain a core member.

Then the core member thus obtained was employed to obtain a molded product in the same way as Example 1. The bending stress and the post-temporary-break stress of the molded product, and the thermal conductivity of the resulting vacuum insulation panel were measured.

### [Example 9]

A core member was obtained in the same way as Example 8 as shown in Table 1 except that 16.7 parts by mass of silicon carbide (product name "NISSORUNDUM MSU", manufactured by Pacific Rundum Co., Ltd.) was employed as the opacifier. Then the core member thus obtained was employed to obtain a molded product in the same way as Example 1. The bending stress and the post-temporary-break stress of the molded product, and the thermal conductivity of the resulting vacuum insulation panel were measured.

### [Example 11]

A core member was obtained in the same way as Example 9 except that the composition of the core member was changed as shown in Table 1 (no sodium silicate was added). Then the core member thus obtained was employed to obtain a molded product in the same way as Example 1. The bending stress and the post-temporary-break stress of the molded product, and the thermal conductivity of the resulting vacuum insulation panel were measured.

### [Example 12]

10 Parts by mass of silica-magnesia-calcia fibers (product name "Superwool (registered trademark) Plus bulk", D30: 227 µm, D90: 902 µm, manufactured by Shin-Nippon Thermal Ceramics Corporation) as the inorganic fibers, and 10 parts by mass of graphite (product name "CP.B", manufactured by Nippon Graphite Corporation) were added to 90 parts by mass of fumed silica. The blender was employed to obtain a core member.

Then the core member thus obtained was employed to obtain a molded product in the same way as Example 1. The bending stress and the post-temporary-break stress of the molded product, and the thermal conductivity of the resulting vacuum insulation panel were measured.

### [Comparative examples 1 to 4]

In each comparative example, a molded product was obtained in the same way as Example 1 except that the composition of the core member was changed as shown in Table 1. Then the core member thus obtained was employed to obtain a molded product in the same way as Example 1. The bending stress and the post-temporary-break stress of the molded product, and the thermal conductivity of the resulting vacuum insulation panel were measured.

**[Table 1]**

| Unit: parts by mass | | | | | | | | | |
|---|---|---|---|---|---|---|---|---|---|
| | Powder material | | | | Fiber | | | Binder | Water |
| | A-1 | A-2 | A-3 | A-4 | B-1 | B-2 | B-3 | D-1 | |
| Ex. 1 | 80.0 | 20.0 | - | - | 2.0 | - | - | 3.4 | 22.9 |
| Ex. 2 | 80.0 | 20.0 | - | - | 5.0 | - | - | 3.4 | 22.9 |
| Ex. 3 | 90.0 | 10.0 | - | - | 2.0 | - | - | 3.4 | 22.9 |
| Ex. 4 | 90.0 | 10.0 | - | - | 5.0 | - | - | 3.4 | 22.9 |
| Ex. 5 | 90.0 | 10.0 | - | - | 10.0 | - | - | 3.4 | 22.9 |
| Ex. 6 | 100.0 | 0.0 | - | - | 5.0 | - | - | 3.4 | 22.9 |
| Ex. 7 | 90.0 | 10.0 | - | - | - | 5.0 | - | 3.4 | 22.9 |
| Ex. 8 | 75.0 | 8.3 | 16.7 | - | 4.2 | - | - | 2.8 | 19.1 |
| Ex. 9 | 75.0 | 8.3 | - | 16.7 | 4.2 | - | - | 2.8 | 19.1 |
| Ex. 10 | 70.0 | 30.0 | - | - | 20.0 | - | - 10.2 | 10.2 | 18.8 |
| Comp. Ex. 1 | 65.0 | 35.0 | - | - | 5.0 | - | - | 3.4 | 22.9 |
| Comp. Ex. 2 | 90.0 | 10.0 | - | - | - | - | - | 3.4 | 22.9 |
| Comp. Ex. 3 | 90.0 | 10.0 | - | - | - | - | 5.0 | 3.4 | 22.9 |
| Comp. Ex. 4 | 90.0 | 10.0 | - | - | - | - | - | - | 25.0 |
| Ex. 11 | 75.0 | 8.3 | - | 16.7 | 4.2 | - | - | - | 20.8 |
| Ex. 12 | 83.3 | - | 16.7 | - | 10.0 | - | - | - | - |

| | | | | | | | | | |
|---|---|---|---|---|---|---|---|---|---|
| The abbreviations in Table 1 stand for the following means. A-1: fumed silica (product name "AEROSIL 300", having a specific surface area of 300 m²/g, manufactured by Nippon AEROSIL Co., Ltd.) A-2: porous silica (product name "M.S.GEL", manufactured by AGC Si-Tech Co., Ltd.) A-3: graphite (product name "CP.B", manufactured by Nippon Graphite Corporation) A-4: silicon carbide (product name "NISSORUNDUM MSU" manufactured by Pacific Rundum Co., Ltd.) B-1: silica-magnesia-calcia fibers (product name "Superwool (registered trademark) Plus bulk", D30: 227 µm, D90: 902 µm, average fiber diameter: 3 µm, manufactured by Shin-Nippon Thermal Ceramics Corporation) B-2: rock wool (product name "MINERAL FIBER RAW COTTON NM8600", D30: 253 µm, D90: 668 µm, average fiber diameter: 7 µm (JIS 9504), manufactured by Taiheiyo Materials Corporation) B-3: crushed product of silica-magnesia-calcia fibers (product name "Superwool (registered trademark) Plus Bulk" manufactured by Shin-Nippon Thermal Ceramics Corporation) (D30: 75 µm, D90: 629 µm, average fiber diameter: 3 µm) D-1: sodium silicate having a molecular ratio of 3 (manufactured by AGC Si-Tech Co., Ltd.) | | | | | | | | | |

The measurement results of the bending stress and the post-temporary-break bending stress, and the measurement results of the thermal conductivity conducted in each Example are shown in Table 2.

The wording "Immediate break" in Table 2 means that there is no region where stresses continue to gradually decrease as strain increases after the maximum value of the stresses caused by strain was observed in the three-point bending test, in other words, the stress went down to zero immediately after the break of the molded products was triggered.

**[Table 2]**

| | Measurement of bending strength | | | Measurement of thermal conductivity | Handling performance |
|---|---|---|---|---|---|
| | Bending strength [kPa] | Post-temporary-break bending strength [kPa] | Density of molded product [g/cm³] | Thermal conductivity [mW/mK] | - |
| Ex. 1 | 35.2 | 17.6 | 0.20 | 6.7 | Excellent |
| Ex. 2 | 25.5 | 20.7 | 0.19 | 6.7 | Excellent |
| Ex. 3 | 22.1 | 11.1 | 0.19 | 7.0 | Excellent |
| Ex. 4 | 29.3 | 27.7 | 0.20 | 7.2 | Excellent |
| Ex. 5 | 46.2 | 43.6 | 0.21 | 6.8 | Excellent |
| Ex. 6 | 43.4 | 5.9 | 0.19 | 7.4 | Excellent |
| Ex. 7 | 22.4 | 9.4 | 0.18 | 7.0 | Excellent |
| Ex. 8 | 10.1 | 5.8 | 0.19 | 4.9 | Excellent |
| Ex. 9 | 11.2 | 7.0 | 0.19 | 5.6 | Excellent |
| Ex. 10 | 20.2 | 20.2 | 0.21 | 6.5 | Excellent |
| Comp. Ex. 1 | 3.3 | 3.3 | 0.19 | 6.5 | Insufficient |
| Comp. Ex. 2 | 26.9 | Immediate break | 0.18 | 7.3 | Insufficient |
| Comp. Ex. 3 | 9.1 | Immediate break | 0.19 | 7.1 | Insufficient |
| Comp. Ex. 4 | 17.6 | Immediate break | 0.17 | 7.1 | Insufficient |
| Ex. 11 | 5.6 | 5.6 | 0.17 | 6.1 | Excellent |
| Ex. 12 | 17.4 | 16.4 | 0.17 | 4.6 | Excellent |

As shown in Table 2, it was observed that the molded products of Examples 1 to 12 had a high bending strength, a sufficiently high post-temporary-break bending strength and excellent handling performance. The vacuum insulation panels of Example 1 to 12 had a low thermal conductivity and excellent thermal insulation performance.

On the other hand, the molded product of Comparative Example 1 where the fumed silica occupied a small proportion failed to have sufficient bending strength.

With respect to the molded product of each of Comparative Examples 2 and 4 where the core member contained no fibers, although the molded product had a sufficient bending strength, immediate break was caused, resulting in no observation of post-temporary-break bending strength, and the handling performance was insufficient.

With respect to the molded product of Comparative Example 3 where the employed fibers had a fiber length D30 of less than 100 µm, although the molded product had a sufficient strength, immediate break was caused, resulting in no observation of post-temporary-break bending strength, and the handling performance was insufficient.

### INDUSTRIAL APPLICABILITY

The vacuum insulation panel produced in accordance with the present invention can maintain excellent insulation performance in a long period of time and is applicable to items required for heat preservation, cold insulation or insulation, where energy saving is sought. Specifically, the vacuum insulation panel is applicable to walls, roofs, floors and pipes of houses and buildings, to the field of household equipment, such as solar light/heat equipment, to the field of heat preservation and cold insulation, such as a thermostatic tank, a water heater, a hot water tank, a rice cooker, a refrigerator, a freezer, a cold preserving box, a cold preserving tank, a vending machine, a cooler box, a cold preserving cover and cold weather clothing, to the field of industrial equipment, e.g. electrical and electronic equipment, such as a laptop computer, a liquid crystal projector, a copying machine, a battery, and a semiconductor manufacturing system, and to the field of a mobile body, such as an automobile, a bus, a truck, a cold preserving vehicle, a train, a freight train and a ship, for example.

The entire disclosure of Japanese Patent Application No. 2014-113179 filed on May 30, 2014 including specification, claims, drawings and summary is incorporated herein by reference in its entirety.

### REFERENCE SYMBOLS

- 1:: vacuum insulation panel
- 10:: molded product
- 12:: envelope

## Claims

1. A vacuum insulation panel (1) comprising a molded product (10) and an envelope (12) having an airtight property; the molded product (10) being decompressed and encapsulated in the envelope; the molded product (10) being molded from fibers and a powder material containing fumed silica;
the fibers comprising fibers having a fiber length D30 of at least 100 µm and fibers having a fiber length D90 of at most 20 mm; the content ratio of the fumed silica in the powder material being at least 70 mass%; and
the content ratio of the fibers being from 2 to 30 parts by mass to the powder material having a total mass of 100 parts by mass.

2. The vacuum insulation panel according to claim 1, wherein the molded product being molded from a binder, fibers and a powder material containing fumed silica.

3. The vacuum insulation panel according to Claim 2, wherein the content ratio of the binder is from 0.1 to 15 parts by mass to the powder material having a total mass of 100 parts by mass.

4. The vacuum insulation panel according to any one of Claims 1 to 3, wherein the powder material contains either one or both of porous silica and an opacifier.

5. The vacuum insulation panel according to Claim 4, wherein the content ratio of the porous silica in the powder material (having 100 mass%) is at most 30 mass%.

6. The vacuum insulation panel according to Claim 4, wherein the content ratio of the opacifier in the powder material (having 100 mass%) is at most 30 mass%.

7. The vacuum insulation panel according to any one of Claims 4 to 6, wherein the molded product comprises fumed silica particles, the fumed silica particles having a binder applied thereto, and the ratio of the mass M_{A} of the fumed silica particles contained in the powder material prior to the application of the binder in reference to the mass M_{B} of particles of the porous silica (M_{A}/M_{B}) is from 70/30 to 100/0.

8. The vacuum insulation panel according to any one of Claims 1 to 7, wherein the molded product has a density of from 0.15 to 0.35 g/cm³.

9. The vacuum insulation panel according to any one of Claims 1 to 8, wherein the fibers include either one or both of resin fibers or inorganic fibers.

10. The vacuum insulation panel according to any one of Claims 1 to 9, wherein the fibers contain at least one kind of the inorganic fibers selected from the group consisting of alumina fibers, mullite fibers, silica fibers, glass wool, glass fibers, rock wool, slag wool, silicon carbide fibers, carbon fibers, silica-alumina fibers, silica-alumina-magnesia fibers, silica-alumina-zirconia fibers and silica-magnesia-calcia fibers.

11. The vacuum insulation panel according to any one of Claims 1 to 10, wherein the envelope has a degree of vacuum of at most 1×10³ Pa therein.

12. The vacuum insulation panel according to any one of Claims 1 to 11, having a bending strength of at least 5 kPa and a post-temporary-break bending strength of at least 5 kPa.

## Patentansprüche

1. Vakuumisolierungspaneel (1), umfassend ein geformtes Produkt (10) und eine Hülle (12) mit einer luftdichten Eigenschaft; wobei das geformte Produkt (10) dekomprimiert und in der Hülle eingekapselt ist; wobei das geformte Produkt (10) aus Fasern und einem Pulvermaterial, das pyrogenes Siliziumdioxid enthält, geformt ist;
wobei die Fasern Fasern mit einer Faserlänge D30 von mindestens 100 µm und Fasern mit einer Faserlänge D90 von höchstens 20 mm umfassen; wobei das Anteilsverhältnis des pyrogenen Siliziumdioxids in dem Pulvermaterial mindestens 70 Massen-% beträgt; und
wobei das Anteilsverhältnis der Fasern von 2 bis 30 Massenteile zu dem Pulvermaterial mit einer Gesamtmasse von 100 Massenteilen beträgt.

2. Vakuumisolierungspaneel nach Anspruch 1, wobei das geformte Produkt aus einem Bindemittel, Fasern und einem Pulvermaterial, das pyrogenes Siliziumdioxid enthält, geformt ist.

3. Vakuumisolierungspaneel nach Anspruch 2, wobei das Anteilsverhältnis des Bindemittels von 0,1 bis 15 Massenteile zu dem Pulvermaterial mit einer Gesamtmasse von 100 Massenteilen beträgt.

4. Vakuumisolierungspaneel nach einem der Ansprüche 1 bis 3, wobei das Pulvermaterial entweder eines oder beides aus porösem Siliziumdioxid und einem Trübungsmittel enthält.

5. Vakuumisolierungspaneel nach Anspruch 4, wobei das Anteilsverhältnis des porösen Siliziumdioxids in dem Pulvermaterial (mit 100 Massen-%) höchstens 30 Massen-% beträgt.

6. Vakuumisolierungspaneel nach Anspruch 4, wobei das Anteilsverhältnis des Trübungsmittels in dem Pulvermaterial (mit 100 Massen-%) höchstens 30 Massen-% beträgt.

7. Vakuumisolierungspaneel nach einem der Ansprüche 4 bis 6, wobei das geformte Produkt pyrogene Siliziumdioxidteilchen umfasst, wobei die pyrogenen Siliziumdioxidteilchen ein darauf aufgetragenes Bindemittel aufweisen und das Verhältnis der Masse M_{A} der pyrogenen Siliziumdioxidteilchen, enthalten in dem Pulvermaterial vor der Auftragung des Bindemittels, in Bezug zu der Masse M_{B} der Teilchen des porösen Siliziumdioxids (M_{A}/M_{B}) von 70/30 bis 100/0 beträgt.

8. Vakuumisolierungspaneel nach einem der Ansprüche 1 bis 7, wobei das geformte Produkt eine Dichte von 0,15 bis 0,35 g/cm³ aufweist.

9. Vakuumisolierungspaneel nach einem der Ansprüche 1 bis 8, wobei die Fasern eines oder beides aus Harzfasern oder anorganischen Fasern enthalten.

10. Vakuumisolierungspaneel nach einem der Ansprüche 1 bis 9, wobei die Fasern mindestens eine Art der anorganischen Fasern, ausgewählt aus der Gruppe, bestehend aus Aluminiumoxidfasern, Mullitfasern, Siliziumdioxidfasern, Glaswolle, Glasfasern, Steinwolle, Schlackenwolle, Siliziumcarbidfasern, Kohlenstofffasern, Siliziumdioxid-Aluminiumoxid-Fasern, Siliziumdioxid-Aluminiumoxid-Magnesiumoxid-Fasern, Siliziumdioxid-Aluminiumoxid-Zirkonoxid-Fasern und Siliziumdioxid-Magnesiumoxid-Calciumoxid-Fasern, enthalten.

11. Vakuumisolierungspaneel nach einem der Ansprüche 1 bis 10, wobei die Hülle einen Vakuumgrad von höchstens 1×10³ Pa darin aufweist.

12. Vakuumisolierungspaneel nach einem der Ansprüche 1 bis 11, das eine Biegefestigkeit von mindestens 5 kPa und eine post-temporär-Bruch-Biegefestigkeit von mindestens 5 kPa aufweist.

## Revendications

1. Panneau isolant sous vide (1) comprenant un produit moulé (10) et une enveloppe (12) présentant une propriété étanche à l'air ; le produit moulé (10) étant décompressé et enfermé dans l'enveloppe ; le produit moulé (10) étant moulé à partir de fibres et d'un matériau en poudre qui contient de la silice pyrogénée ; les fibres comprenant des fibres d'une longueur de fibre D30 de 100 *µ*m au minimum et des fibres d'une longueur de fibre D90 de 20 mm au maximum ; le rapport de teneur de la silice pyrogénée dans le matériau en poudre étant de 70 % en masse au minimum ; et le rapport de contenu des fibres étant de 2 à 30 parties en masse par rapport au matériau en poudre présentant une masse totale de 100 parties en masse.

2. Panneau isolant sous vide selon la revendication 1, dans lequel le produit moulé est moulé à partir d'un liant, de fibres et d'un matériau en poudre contenant de la silice pyrogénée.

3. Panneau isolant sous vide selon la revendication 2, dans lequel le rapport de contenu du liant est de 0,1 à 15 parties en masse par rapport au matériau en poudre présentant une masse totale de 100 parties en masse.

4. Panneau isolant sous vide selon l'une quelconque des revendications 1 à 3, dans lequel le matériau en poudre contient de la silice poreuse ou un opacifiant, ou les deux.

5. Panneau isolant sous vide selon la revendication 4, dans lequel le rapport de contenu de la silice poreuse dans le matériau en poudre (présentant une masse totale de 100 parties en masse) est de 30 % en masse au maximum.

6. Panneau isolant sous vide selon la revendication 4, dans lequel le rapport de contenu de l'opacifiant dans le matériau en poudre (présentant une masse totale de 100 parties en masse) est de 30 % en masse au maximum.

7. Panneau isolant sous vide selon l'une quelconque des revendications 4 à 6, dans lequel le produit moulé comprend des particules de silice pyrogénée, les particules de silice pyrogénée présentant, appliqué sur elle, un liant, et le rapport de la masse M_{A} des particules de silice pyrogénées contenues dans le matériau en poudre avant l'application du liant en référence à la masse M_{B} de particules de silice poreuse (M_{A}/M_{B}) est de 70/30 à 100/0.

8. Panneau isolant sous vide selon l'une quelconque des revendications 1 à 7, dans lequel le produit moulé a une densité de 0,15 à 0,35 g/cm³.

9. Panneau isolant sous vide selon l'une quelconque des revendications 1 à 8, dans lequel les fibres contiennent des fibres de résine ou des fibres inorganiques, ou les deux.

10. Panneau isolant sous vide selon l'une quelconque des revendications 1 à 9, dans lequel les fibres contiennent au moins une sorte de fibres inorganiques choisie dans le groupe constitué par les fibres d'alumine, les fibres de mullite, les fibres de silice, la laine de verre, les fibres de verre, la laine de roche, la laine de laitier, les fibres de carbure de silicium, les fibres de carbone, les fibres de silice-alumine, les fibres de silice-alumine-magnésie, les fibres de silice-alumine-zircone et les fibres de silice-magnésie-calcie.

11. Panneau isolant sous vide selon l'une quelconque des revendications 1 à 10, dans lequel l'enveloppe a un degré de vide de 1×10³ au maximum.

12. Panneau isolant sous vide selon l'une quelconque des revendications 1 à 11, présentant une résistance à la flexion de 5 kPa au minimum et une résistance à la flexion post-rupture temporaire de 5 kPa au minimum.
